# EUROPEAN PATENT APPLICATION

(11) **EP 1 246 381 A1**
(43) Date of publication of application: **02.10.2002**
(21) Application number: 01302861.8
(22) Date of filing: 28.03.2001
(51) Int. Cl.: H04B 15/02

(54) **EMC filter**

(71) Applicant: LUCENT TECHNOLOGIES INC., Murray Hill, New Jersey 07974-0636 (US)
(72) Inventor: Gotz, Hans-Joachim, Dr., 90411 Nürnberg (DE); Hembes, Rainer, 55270 Ober-Olm (DE); Haberditzl, Rainer, 90482 Nürnberg (DE)
(74) Representative: Sarup, David Alexander

(57) **Abstract**

One object of the invention is to provide a new EMC filter which is improved over the prior art and which ensures reliable protection against electromagnetic interference in a considerably simplified manner when using a number of mutually independent energy sources.

For protection against electromagnetic interference in an apparatus which is preferably screened by a metal housing and has a loaded device which can be fed from at least two separate energy sources, the invention proposes that an EMC filter with a common-mode inductor (L9) be designed such that said inductor is designed for the supply and return line paths which are provided between the energy sources and the load device to pass through when they are connected.

This ensures that transition to magnetic saturation is essentially completely precluded even in the case of redundant power supplies to which respectively associated line paths can be routed to and from the load device and, in consequence, with the current being shared differently, since the sum of all the currents passing through the common-mode inductor (L9) is approximately zero.

## Description

The invention relates to an EMC filter for apparatuses having a load device which can be fed electrically from at least two separate energy sources, according to Claim 1.

As is generally known, the implementation of and compliance with defined requirements relating to electromagnetic capability and freedom from interference (EMC) of electrical and/or electronic devices is one of the major objects in essentially all fields of electrical engineering.

Common-mode inductors, as they are referred to, are conventionally used in order to keep interference from external sources away from such devices and/or in order to prevent interference signals caused by devices themselves from being emitted via the power supply lines to the environment.

Such common-mode inductors are also referred to as current-compensated inductors, when the sum of the magnetic fluxes is approximately zero, because the currents are flowing in opposite directions. In consequence, only a comparatively small magnetic core is required for a large common-mode inductance, without the magnetic saturation region being reached. The transition to magnetic saturation must be prevented since, otherwise, the inductance would be drastically reduced, and the protective effect for electromagnetic freedom from interference would be lost.

This approach is widely used for mains-powered apparatuses with inductors having two windings normally being used for single-phase AC applications, and inductors having three windings normally being used for 3-phase applications. Furthermore, this procedure is also used in particular for supply lines and/or balanced signal conductors for telecommunication devices and/or systems.

However, particularly in the case of telecommunications devices, there is also a requirement for redundant supply voltages and/or additional locally required supply voltages. Two mutually independent batteries or rechargeable batteries are frequently used for this purpose.

The positive and negative terminals of these batteries must be connected via insulated conductors to the supply connections of the telecommunications devices. In addition, the positive terminal of these batteries is conventionally connected to a protective earth. The device receives the necessary supply current from one of the batteries or, depending on the requirement and depending on the individual battery voltages, also from a number of batteries at the same time.

Furthermore, separate power distribution paths for the separate voltage sources are normally provided within such devices. In this case, the separate supply paths are connected to one another, for example via decoupling diodes, only at replaceable sub-units in the interior of the devices, and supply an internal power supply device in these sub-units. A common-mode inductor can in this case be used between such a connection point and the internal power supply device for the sub-units.

However, in many cases this procedure has been found to be inadequate since interference can be fed into the mains system via the entire power distribution network inside the device housing. In consequence, additional EMC filters are frequently required for the supply lines, close to the mains or battery connections of such devices. Since the positive lines of the batteries are normally conductively connected or are connected via coupling diodes within the device and are also connected at the batteries via the protective earths, the entire return current can be distributed in an undefined manner between the return conductors. This distribution depends on the resistance of the individual return line paths.

In particular, it is possible for a current which is being fed back to pass through both return lines, even when the current which is being fed in originates from only one of the two batteries.

One object of the invention is thus to provide a new EMC filter which is improved over the prior art and which ensures reliable protection against electromagnetic interference in a considerably simplified manner when using a number of mutually independent energy sources.

According to the invention, this object is achieved by an EMC filter, an apparatus and an inductor having the features of Claims 1, 13 and 14, respectively. Advantageous and/or preferred embodiments and developments are the subject matter of the dependent claims.

Thus, for protection against electromagnetic interference for an apparatus which is preferably screened by a metal housing and has a load device which can be fed from at least two separate energy sources, the invention thus provides that an EMC filter with a common-mode inductor be designed such that said inductor is designed for the supply and return line paths which are provided between the energy sources and the load device to pass through jointly.

It is particularly advantageous in this case that, even in the case of redundant power supplies, those respectively associated line paths are routed to and from the load device separately from the respective other line paths, the transition to magnetic saturation of the inductance is essentially completely precluded independently of any knowledge of the currents which are actually being carried, since the sum of all the currents passing through the common-mode inductor is approximately zero once again.

One preferred embodiment provides for the inductor to have a number of windings corresponding to the number of line paths, depending on the application. In particular to satisfy different customer requirements and/or Standards that have to be complied with, the invention provides for the common-mode inductor according to the invention to be designed for a communal return line to pass through or for separate return lines to pass through.

For cost-effective production, and in particular for mass production, it has also been found to be expedient to have an inductor which is produced in a compact manner and is designed with connecting devices to form at least two primaries and two secondaries.

Depending on the specific field of use, it has furthermore been found in practice to be advantageous to use, in particular, an EMC filter with a common-mode inductor surrounding a magnetic core.

One preferred development of the EMC filter according to the invention provides for switching between further additional suppression components, in particular in the area of the connecting devices provided for the power supply for the apparatus, for the energy sources, and in particular in the form of batteries. In this case, an arrangement of suppression capacitances and inductances in the form of a low-pass filter between the respective supply and return lines associated with an energy source, and the protective-earth conductors, has been found to be expedient. Furthermore, depending on the specific application, additional inductances, which are provided for current splitting, can also be provided.

The invention will be described in more detail in the following text using a preferred exemplary embodiment and with reference to the attached drawing, in which:

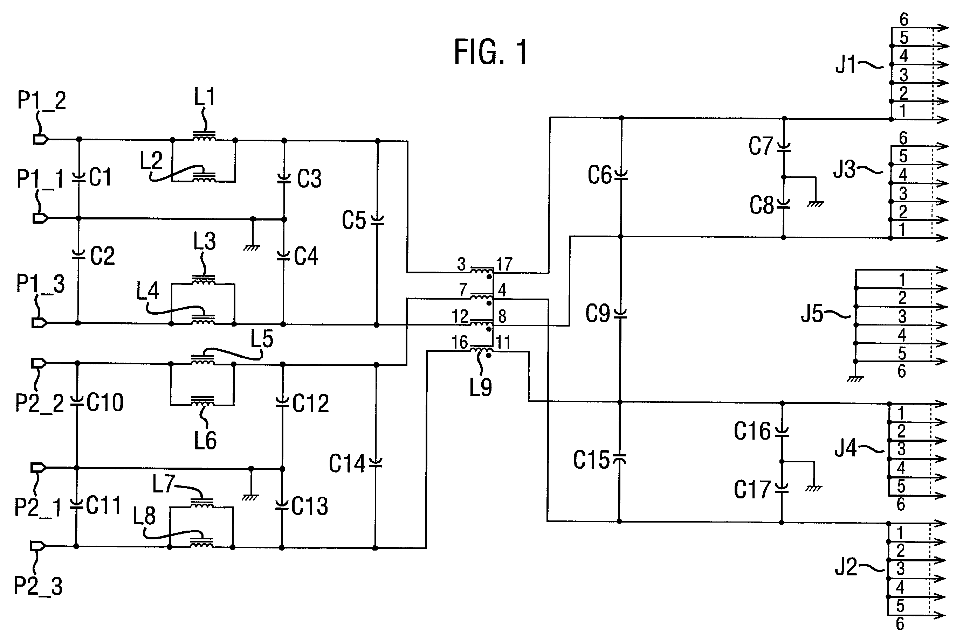

- Fig. 1: shows a schematic illustration of the circuit diagram of a part of an apparatus with a load which can be fed in a redundant manner from two energy sources.

The following text refers to Figure 1 which shows, schematically, the example of a circuit diagram of a sub-region of a telecommunications apparatus which is screened by a metal housing. The apparatus is designed with connections P1_1, P1_2, P1_3, P2_1, P2_2, P2_3 for connection of two energy sources, which are not illustrated, in the form of batteries, P1 and P2, which may have different battery voltages. The connections P1_1 and P2_1 are in this case connected to protective-earth conductors, which are connected to earth. The connections P1_2 and P2_2 are connected to power supply conductors, and the connections P1_3 and P2_3 are connected to the respectively associated current return conductors.

The respective power supply lines which are connected to the connections P1_2 and P2_2 are connected inside the apparatus via respective connecting devices J1 and J2 to a load, which is not illustrated, in order to supply it with power. In a corresponding manner, the return lines, which are connected to connections P1_3 and P2_3, are connected to the load via the respective connecting devices J3 and J4. The load is furthermore connected to a protective earth via the connecting device J5.

In consequence, the load is connected to a redundant power supply, thus ensuring that it is still supplied if one energy source fails.

The supply and return lines which respectively run between the input connections P1_2 and P1_3, as well as P2_2 and P2_3 and the respective connecting devices J1 and J2 as well as J3 and J4 are, as can be seen in Figure 1, arranged separately, with the respective supply and return lines associated with an energy source conventionally being routed within a multicore cable.

The EMC filter according to the invention has a common inductor L9 through which all four separately running line paths are routed. The inductor L9 which, in practice, is expediently based on a magnetic core, in the present case comprises four windings, that is to say a specific winding is provided for each supply path and for each return path. The inductor is prefabricated as a component in the present exemplary embodiment. Furthermore, for respectively accommodating connecting ends which are designed to be complementary to the conductors, the inductor L9 has plug-in devices 3, 7, 12, 16, 17, 4, 8 and 11. The winding ends which merge into the plug-in device thus form two primaries and two secondaries. A cable which can be associated with the energy source P1 is, in consequence, connected to the conductor L9 in such a way that the supply conductor is connected to the connection 3 and the return conductor is connected to the connection 12. The supply and return conductors which continue onwards and are connected between the inductor L9 and the connecting devices J1 and J3 are connected to the inductor connections 17 and 8 respectively. In a corresponding manner, the supply conductor which is connected via the connection P2-2 to the second energy source is routed via the inductor connections 7 and 4 to the connecting device J2, and the return conductor which is connected via the connection P2-3 to the same energy source is routed via the inductor connections 16 and 11 to the connecting device J4.

The common inductor L9 thus ensures that, even without knowing which supply and return lines are actually being used by the load to carry current at that time, the sum of the currents passing through the inductor is always essentially zero. In consequence, magnetic saturation of the inductor, which is thus current-compensated, is precluded.

To provide a further protective effect, the EMC filter also has inductors L1 to L8 as well capacitances C1 to C17. In realistic applications, the inductors must be connected in parallel, for load reasons. The capacitors in the filter thus at the same time reduce the balanced and unbalanced interference signals in the supply lines. These components are arranged close to the connections P1_1, P1_2, P1_3, P2_1, P2_2, P2_3 and to the connecting devices J1 to J5 between the individual supply and return lines and the protective-earth conductors, for the suppression and decoupling.

In detail, the respective capacitances C1 and C3, C2 and C4, C10 and C12 as well as C11 and 13 connected between a supply line and a return line and the protective-earth conductors, together with the inductances L1, L4, L5 and L8, respectively, form a low-pass filter in the form of a π-circuit. Further low-pass filters for suppression are also constructed, in particular using the capacitive components C1, C2 and C5 in conjunction with the inductance L1, as well as the capacitive components C10, C11, C14 together with the inductance L5, between the respectively associated supply and return lines.

Further decoupling capacitances C6, C9 and C15 are arranged in the area of the connecting devices, J1 to J4 between the supply and return lines. Finally, capacitances C7, C8, C16 and C17 are in each case provided for decoupling the lines from the protective earth.

It should be mentioned that, in the case of a redundant power supply from more than just two energy sources, the filter according to the invention can be appropriately upgraded or adapted within the knowledge and experience of a person skilled in the art in this field, without departing from the protective scope of the invention. The invention furthermore covers embodiments in which return conductors are routed jointly rather than separately.

## Claims

1. EMC filter for apparatuses, which comprises a load device which can be fed electrically from at least two separate energy sources, **characterized by** a common-mode inductor (L9) through which supply and return lines, which are provided between the energy sources and the load device, can be passed jointly.

2. EMC filter according to Claim 1, **characterized in that** the common-mode inductor (L9) has a number of windings corresponding to the number of supply and return lines, with the supply lines being routed separately.

3. EMC Filter according to Claim 1 or 2, **characterized in that** the common-mode inductor (L9) is designed for a communal return line to pass through.

4. EMC filter according to Claim 1 or 2, **characterized in that** the common-mode inductor (L9) is designed for separate return lines to pass through.

5. EMC filter according to one of Claims 1 to 4, **characterized in that** the common-mode inductor (L9) is produced in a compact manner with connecting devices (3, 7, 12, 16, 17, 4, 8, 11) for accommodating connection devices which are designed in a complementary manner to the supply and return lines.

6. EMC filter according to one of Claims 1 to 5, **characterized in that** the common-mode inductor (L9) has at least one common magnetic core.

7. EMC filter according to one of Claims 1 to 6, **characterized by** additional capacitive components (C1, ..., C17) and inductive components (L1, ..., L8) which are arranged in the connecting area of the energy supply sources and/or of the load device between the supply and return lines.

8. EMC filter according to one of Claims 1 to 7, **characterized in that** capacitive components (C1, ..., C5, C10, ..., C14) are arranged between the supply and return lines and/or between the supply and return lines and protective-earth conductors.

9. EMC filter according to one of Claims 1 to 8, **characterized in that** capacitive components (C1, ..., C5, C10, ..., C14) and inductive components (L1, L4, L5, L8) in the form of at least one low-pass filter are connected in the connecting area of the energy supply sources, between the respective supply and return lines associated with an energy source and/or the protective-earth conductor.

10. EMC filter according to one of Claims 1 to 10, **characterized by** a metallic housing which screens the apparatus.

11. Apparatus having a load device which can be fed from at least two separate energy sources, **characterized by** an EMC filter according to one of Claims 1 to 10.

12. Apparatus according to Claim 10, **characterized in that** batteries and/or rechargeable batteries are used as the energy sources.

13. Common-mode inductor for an EMC filter according to one of Claims 1 to 11, which comprises connecting devices (3, 7, 12, 16, 17, 4, 8, 11) for separately routed supply and return lines for electrically feeding a load device from at least two energy sources.

14. Common-mode inductor for an EMC filter as claimed in one of Claims 1 to 10, but with three windings for the electrical feed to a load device from at least two energy sources with a common return conductor.
